# EUROPEAN PATENT APPLICATION

(11) **EP 3 587 494 A1**
(43) Date of publication of application: **01.01.2020**
(21) Application number: 19181622.2
(22) Date of filing: 21.06.2019
(51) Int. Cl.: C08L 67/02

(54) **RECYCABLE PACKAGING FILM COMPOSITION WITH EXCELLENT ADHESIVENESS**

(30) Priority: 28.06.2018 KR 20180074881
(71) Applicant: Youngil Co. Ltd., Gwangju City 464-874 (KR)
(72) Inventor: LEE, HO-YOUNG, 472-725 Gyeonggi-do (KR)
(74) Representative: Richardt Patentanwälte PartG mbB

(57) **Abstract**

Disclosed is a packaging film composition recyclable and excellent in adhesiveness, and more particularly to a packaging film composition recyclable and excellent in adhesiveness that is composed of a PET copolymer to secure high adhesiveness and become recyclable, enhancing thermal adhesion and printability of PE- or PP-based films and improving the reprocessability to increase the potential of recycling and to reduce the environmental contaminations caused by the increasing waste plastics.

The packaging film composition recyclable and excellent in adhesiveness is prepared by mixing 100 parts by weight of a PET copolymer, 5 to 120 parts by weight of an ecofriendly plasticizer; 5 to 100 parts by weight of acryl rubber or an acryl-based copolymer and butadiene rubber or a butadiene-based copolymer; and 5 to 150 parts by weight of a thermoplastic polyester elastomer (TPEE) and can be processed by any one method of injection, extrusion, and calendering.

## Description

### FIELD OF THE INVENTION

The present invention relates to a recyclable packaging film composition with excellent adhesiveness, and more particularly to a recyclable packaging film composition with excellent adhesiveness that is composed of a polyethylene terephthalate (PET) copolymer to secure high adhesiveness and become recyclable, enhancing thermal adhesion and printability of polyethylene (PE)- or polypropylene (PP)-based films and improving the reprocessability to increase the potential of recycling and to reduce the environmental contaminations caused by the increasing waste plastics.

### BACKGROUND OF THE INVENTION

Although polyvinyl chloride (PVC) is replaced by polyolefin resins or polyester resins, such as PE, PP or PET, the packaging films currently available are mostly made from PE or PP and even from PET resin with more uses.

Those films are, however, restricted in use due to the properties characteristic to the individual resin components and, when in use, causing severe environmental contaminations. The films made from PE or PP resins are toxic, but they are most excellent in terms of recyclability and transparency, but poor in adhesiveness and printability. The PET films are good in transparency or other properties, but difficult to reuse and poor in post-processability.

In an attempt to solve this problem, the PET copolymer is used as a base resin to lower the hardness and improve the processability, intending to produce PE, PP, or PET films with enhanced properties and processability and thereby to solve the issue concerning environmental contaminations resulting from waste plastics.

The background art of the present invention includes Korean Patent No. 1004614 under the title of "PETG-based molding deco-sheet similar in moldability to PVC" (Patent Document 1) . The prior art discloses a deco-sheet including a PETG alloy resin prepared by alloying an elastomer resin with a polyethylene phthalate glycol (PETG) resin, where the elastomer resin is a copolymer of a polybutylene terephthalate (PBT) resin and polyether glycol.

The prior art is similar in moldability to PVC and chiefly used in hard sheets, food containers, etc., but unavailable in making soft sheets due to the difficulty to soften.

### SUMMARY OF THE INVENTION

For solving the problems with the prior art, it is an object of the present invention to provide a recyclable packaging film composition with excellent adhesiveness that can be recycled with enhanced thermal adhesion and tensile strength to provide a substitute for the films prepared from unrecyclable PET resins alone or in combination with nylon or olefin-based resin through lamination, coating, or co-extrusion and thereby to prevent severe environmental contaminations caused by waste plastics, realizing good compatibility and miscibility with polyolefin- or polystyrene (PS)-based resins due to high tensile strength and thermal adhesion. In accordance with the present invention, there is provided a recyclable packaging film composition with excellent adhesiveness that comprises: 100 parts by weight of a PET copolymer or a PBT resin; 5 to 120 parts by weight of an additive selected from the group consisting of an ecofriendly plasticizer, vegetable oil, styrene-based block copolymer and a thermoplastic polyurethane (TPU) resin; 5 to 100 parts by weight of acryl rubber or an acryl-based copolymer and butadiene rubber or a butadiene-based copolymer and 5 to 150 parts by weight of a thermoplastic polyester elastomer (TPEE) or a thermoplastic polyurethane (TPU). The packaging film composition may be processed by any one method of injection, extrusion, and calendering.

In accordance with one embodiment, the packaging film composition comprises: 100 parts by weight of a PET copolymer, 5 to 120 parts by weight of an ecofriendly plasticizer; 5 to 100 parts by weight of acryl rubber or an acryl-based copolymer and butadiene rubber or a butadiene-based copolymer; and 5 to 150 parts by weight of a thermoplastic polyester elastomer (TPEE) . This packaging film composition may also be processed by any one method of injection, extrusion, and calendaring.

In one embodiment the of the packaging film composition, the additive is a vegetable oil.

In another embodiment of the recyclable packaging film composition with excellent adhesiveness, the additive is a styrene-based block copolymer.

In another embodiment of the recyclable packaging film composition with excellent adhesiveness, the additive is a thermoplastic polyurethane (TPU) resin.

The recyclable packaging film composition with excellent adhesiveness may further comprise 5 to 100 parts by weight of a paraffin-based oil.

In one embodiment of the invention, the ecofriendly plasticizer is used in combination with a core-shell type copolymer.

In one embodiment of the invention, the PET copolymer is replaced by a PBT resin.

In one embodiment of the invention the packaging film composition may further comprise 100 to 2000 parts by weight of a polyolefin-based resin.

In the packaging film composition, the thermoplastic copolyester elastomer (TPEE) resin may be replaced by a thermoplastic polyurethane (TPU) resin; or the packaging film composition further includes 10 to 300 parts by weight of a TPU resin.

Although the greatest weakness of the PET copolymer is the difficulty of softening, the film made from the recyclable packaging film composition with excellent adhesiveness according to the present invention alone or in combination with an olefin-based resin through mixing or co-extrusion is effective to enhance thermal adhesion, tensile strength and recyclability thereby replacing films made from an unrecyclable PET alone or in combination with nylon or olefin-based resin through lamination, coating or co-extrusion, realizing thermal adhesion of packaging materials having a film thickness of 0.5 mm or greater, and preventing environmental contaminations caused by waste plastics. The films made by applying a coating of linear low-density polyethylene (LLDPE) resin on PET or orientated polypropylene (OPP) films are chiefly used in caps for water bottles or lids for food containers. Such films cannot be recycled unless separated from the bottles or containers due to bad compatibility and miscibility with PP or PS resins constituting the bottles or containers, so they may cause environmental contaminations. By contrast, the film made from the composition of the present invention alone or in combination with another resin such as LLDPE or PP is excellent in tensile strength and thermal adhesion and recyclable due to high compatibility and miscibility with PP or PS resins.

### DETAILED DESCRIPTION OF THE INVENTION

Hereinafter, the present invention will be described in further detail with reference to the embodiments, which are given merely for the better understanding of the present invention and not construed to limit the scope of the present invention.

A detailed description will be given as to the technical construction of the present invention according to the preferred embodiments.

The present invention is directed to the preparation of films from a softened PET resin. Generally, the plastic packaging materials mostly used are olefin-based resins like PE or PP, or films made from PVC, PET, TPU, nylon, etc. for special applications. The reason of using such films for special applications is to compensate for the defects of the olefin-based resins in terms of properties, including adhesion, printability, etc. But, lamination or co-extrusion with PVC, PET, TPU, nylon, or the like entails the difficulty of recycling.

Although poor in moldability and impact strength, the PET resin is used in a variety of applications due to its good properties, including glossiness, gas barrier, cleanliness, chemical resistance, tenacity, etc. Yet, it is hard to soften to a Shore A hardness of 100 or less, which is the greatest weakness of the PET resin in relation to the PVC resin.

The PVC resin is prepared in the form of powder with high porosity, which results in high absorption of a plasticizer, making it easier to soften the PVC resin. By contrast, the PET resin is prepared in the form of pellets and thus difficult to mix with a liquid such as a plasticizer.

Mixing resin pellets with a liquid material such as a plasticizer or oil involves using an oil pump in a kneader or an extruder, which method is avoided due to low productivity and difficulty of precise manufacturing.

A pressure hose or pipe can be connected to an oil port and a metering pump positioned in the middle of the barrel or cylinder of the extruder to mix the plasticizer with oil under pressure. Among the PET resin, the PET-G resin is most compatible and miscible with a plasticizer or oil; yet, it is impossible to mix 15 or more parts by weight of the PET-G resin with a plasticizer or oil using a pressure hose or pipe connected to an oil port and a metering pump.

For softening the PVC resin, a PVC raw material, a plasticizer, a stabilizer, a lubricant, and other additives are added into a high-speed mixer and mixed for 10 to 15 minutes, increasing the temperature of the mixture to about 80 to 100 °C and having the plasticizer or other additives absorbed by the PVC raw material to create powder without stickiness, which helps feeding the powder into the extruder or the calendering machine. Such a method is available for softening the PVC resin, because the PVC material has high porosity and takes the powder form.

The PET resin is prepared in the form of pellets free from pores, so it cannot be softened by the same softening method as the PVC resin.

As a solution to this problem, a core-shell type copolymer taking the powder form, easily absorbing a plasticizer or oil and exhibiting high compatibility with the PET resin is selected and used in the experiment as given in Table 1.

Table 1 shows the miscibility of a butadiene rubber-based copolymer named C223A (available from Mitsubishi Rayon Co., Ltd., Japan) used as a core-shell type copolymer with an ester-based plasticizer named NEOP (available from Aekyung Petrochemical Company, Rep. of Korea) as an ecofriendly ester-based plasticizer and palm oil as a vegetable oil, which has a relatively high compatibility with a core-shell type copolymer.

The core-shell type copolymer is developed as an anti-impact reinforcing agent primarily for PVC resins and made up of butadiene-based rubber, acrylic rubber, or silicone-acrylic rubber, where the core portion is made of a rubber, and the shell portion is a resin like acryl or styrene acrylonitrile resin (SAN) highly compatible with the above-mentioned rubbers.

Out of the resins available in the investigation for the invention of the novel composition, the core-shell type copolymer is in the form of powder having a good compatibility with the PET resin relative to other resins and considered as an only resin that is highly compatible with thermoplastic polyester elastomer (TPEE), styrene-based block copolymer, thermoplastic polyurethane (TPU), polybutylene terephthalate (PBT), an ester-based plasticizer as an ecofriendly plasticizer, and vegetable oil.

### <Experimental Example 1>

**[Table 1]**

| Component | Example | | | | | | | | |
|---|---|---|---|---|---|---|---|---|---|
| | **1** | **2** | **3** | **4** | **5** | **6** | **7** | **8** | **9** |
| 1. C223A | 100 | 100 | 100 | 100 | 100 | 100 | 100 | 100 | 100 |
| Plasticizer (NEOP) | 10 | 30 | 60 | 100 | 150 | 200 | 250 | 300 | 350 |
| Miscibility | Good | Good | Good | Good | Good | Good | Good | Good | Bad |
| 2. C223A | 100 | 100 | 100 | 100 | 100 | 100 | 100 | 100 | 100 |
| Veggie oil (palm oil) | 10 | 20 | 40 | 60 | 80 | 100 | 120 | 150 | 200 |
| Miscibility | Good | Good | Good | Good | Good | Good | Good | Good | Bad |

| | | | | | | | | | |
|---|---|---|---|---|---|---|---|---|---|
| Note: (1) C223A: Butadiene rubber-based copolymer available from Mitsubishi Rayon Co., Ltd. in Japan (2) NEOP: Ecofriendly ester-based plasticizer available from Aekyung Petrochemical Company from Rep. of Korea | | | | | | | | | |

In this experiment, a raw material in the liquid form like a plasticizer or oil as the most basic component was mixed with a core-shell type copolymer to soften the PET resin, as presented in Table 1. The experiment was performed as given in Table 1 to investigate the miscibility, considering that out of the core-shell type copolymers, the butadiene rubber-based copolymer C223A was relatively good in compatibility with the PET resin.

In softening the PET resin, the stickiness of the mixture and the added amount of the liquid-state raw material with respect to the powder-state raw material are most important in the process of mixing the powder-state C223A with a plasticizer or palm oil. After mixing C223A (which is a butadiene rubber-based copolymer), NEOP (which is an ester-based plasticizer, more specifically a carboxylic aromatic ester) and palm oil together in a mixer, the state of the resultant mixture was examined. In Example 1 to 9, the added amounts of NEOP and palm oil with respect to 100 parts by weight of C223A were increased in a stepwise manner. According to the examination on the miscibility of the mixtures, for the mixtures of Examples 1 to 4, miscibility was good with no stickiness; the mixtures of Examples 5 to 8 were not sticky, but they were considered to be possible to feed into the processing machine like an extruder when used in combination with PET or other resins in the pellet form; and the mixture of Example 9 was highly sticky and considered to be impossible to feed into the processing machine . Upon mixing C223A and NEOP in a high-speed mixer for about 2 to 3 minutes, the temperature of the mixture is increased to about 20 to 30 °C, so the C223A absorbs the NEOP to enable the mixture fed into the extruder or the calendering machine. If the mixing time is increased, cake formation takes place so that the mixture becomes difficult to feed into the processing machine. As shown in the experiment of Table 1, the degree of softening (the rate of lowering the hardness) was similar, even though the added amount of the palm oil was about 50 % of the NEOP. In compound-processing the composition of the present invention, it is desirable to reduce the proportion of the core-shell type copolymer and increase the content of the plasticizer or oil with a view to improving the properties of the composition, such as tensile strength, elongation, and so forth. The reason of this fact is the somewhat low compatibility between the PET resin and the core-shell type copolymer.

According to the experiment as shown in this experimental example, the process of softening the PET resin is performed in the presence of the core-shell type copolymer as an intermediate material for mixing a liquid, such as a plasticizer or palm oil, with PET, TPEE, TPU, or PBT resins in the pellet form, making it possible to use the softening method for PVC resin in the processing of the composition of the present invention and to produce recyclable, non-toxic ecofriendly plastic products as a substitute for soft PVC through injection, extrusion, or calendering.

### <Experimental Example 2>

The principal material of the present invention, PET resin, is a non-toxic ecofriendly resin that has good properties, particularly in terms of transparency; yet, it is poor in processability and difficult to soften. To solve this problem, there have been developed a copolymer with improved processability such as amorphous PET (A-PET) or glycol-modified polyethylene terephthalate (PET-G) and PET copolymers with high viscosity, enabling the process of extrusion or calendering with an extruder.

An experiment was performed with PET-G considered as a PET resin having a relatively good processability, as given in the examples of Table 2.

**[Table 2]**

| Component | Example | | | | | |
|---|---|---|---|---|---|---|
| | **1** | **2** | **3** | **4** | **5** | **6** |
| KN100 | 100 | 100 | 100 | 100 | 100 | 100 |
| C223A | 5 | 10 | 20 | 40 | 50 | 60 |
| Plasticizer (NEOP) | 10 | 20 | 40 | 80 | 100 | 120 |
| Miscibility | Good | Good | Good | Good | Good | Bad |

| Component | Example | | | | | |
|---|---|---|---|---|---|---|
| | 7 | 8 | 9 | 10 | 11 | 12 |
| KN100 | 100 | 100 | 100 | 100 | 100 | 100 |
| C223A | 5 | 10 | 20 | 40 | 50 | 60 |
| Veggie oil (palm oil) | 5 | 10 | 20 | 40 | 50 | 60 |
| Miscibility | Good | Good | Good | Good | Good | Bad |
| Extrusion Temp. (°C) | 190-210 | 190-210 | 190-210 | 190-210 | 190-210 | 190-210 |

| | | | | | | |
|---|---|---|---|---|---|---|
| Note: (1) C223A: Butadiene rubber-based copolymer available from Mitsubishi Rayon Co., Ltd. in Japan (2) NEOP: Ecofriendly ester-based plasticizer available from Aekyung Petrochemical Company from Rep. of Korea (3) KN100: Item number of PET-G available from SK Chemicals in Rep. of Korea | | | | | | |

As given in Examples 1 to 6 of Table 2, 100 parts by weight of PET-G (depicted with the item number KN100, a product from SK Chemicals, Rep. of Korea) was mixed with 5 to 60 parts by weight of a butadiene rubber-based copolymer (C223A), 10 to 120 parts by weight of a plasticizer (NEOP), and 5 to 60 parts by weight of palm oil, which amounts were increased in a stepwise manner. After 3-minute mixing, the resultant mixture was extruded with an extruder at a temperature of 190 to 210 °C. The specimens thus obtained were examined.

Experiments were performed as given in Examples 1 to 12, considering that the compatibility according to the experimental example 1 was highest in the mixture containing 100 parts by weight of C223A with 200 parts by weight of a plasticizer and in the mixture containing 100 parts by weight of C223A with 100 parts by weight of palm oil.

The mixtures of Examples 1 to 4 and 7 to 10 were good in compatibility and possible to feed into the extruder, and the specimens after extrusion had no stickiness. By contrast, the mixtures of Examples 5 and 11 had slight stickiness, and those of Examples 6 and 12 had severe stickiness. The reason of showing stickiness is presumably the excessive proportion of the liquid-state raw material with respect to the proportion of the solid-state raw material, resulting in bleeding or blooming (looks like fungi formed on the surface).

In this experiment, the processability was highest in the mixture containing 100 parts by weight of KN100 (PET-G) with 40 parts by weight of C223A (core-shell type copolymer) and 80 parts by weight of a plasticizer and in the mixture containing 100 parts by weight of KN100 (PET-G) with 50 parts by weight of C223A and 50 parts by weight of palm oil as a vegetable oil.

### <Experimental Example 3>

Thermoplastic polyester elastomer (TPEE) is a block copolymer consisting of hard segments (crystallizable glycol terephthalate) and soft segments (amorphous elastomeric polytetramethylene ether terephthalate) . The TPEE resin has the characteristics of rubber and engineering plastic at the same time, with good properties in terms of thermal resistance, cold resistance, and mechanical properties and high compatibility with other resins, such as PVC, TPU, PET, etc. Due to high compatibility with PET resin according to the experimental results, the TPEE resin is considered as a proper resin for improving the properties of the composition using PET resin as a base component.

In the TPEE resin, the hard segments give elasticity and the soft segments give flexibility. The hard segments confer the TPEE resin with their rigidity, modulus, mechanical strengths, thermal resistance, oil resistance, etc., while the soft segments affect the rubber elasticity, flexibility, and low-temperature characteristics. The higher proportion of the soft segments results in the characteristics of elastomers, that is, high repulsive elasticity, flexibility, impact resistance, etc. Accordingly, the use of low-hardness (Shore D hardness of 50 or less) TPEE resins having the higher proportion of the soft segments may secure higher miscibility and compatibility and reduce the hardness.

The experimental example 3 was performed as given in Table 3, showing that the addition of a TPEE resin may compensate for the drawback to the mixture of KN100 (PET-G) with C223A (core-shell type copolymer) and NEO-P (plasticizer).

**[Table 3]**

| Component | Example | | | | | |
|---|---|---|---|---|---|---|
| | **1** | **2** | **3** | **4** | **5** | **6** |
| KN100 | 100 | 100 | 100 | 100 | 100 | 100 |
| C223A | 25 | 35 | 40 | 50 | 100 | 150 |
| Palm oil | 5 | 20 | 40 | 50 | 130 | 180 |
| 240D | 0 | 5 | 25 | 65 | 150 | 200 |
| Hardness (A) | A97 | A93 | A87 | A72 | A65 | A54 |
| Quality improvement | Bad | Good | Good | Good | Good | Bad |
| Specific gravity | 1.2 | 1.13 | 1.12 | 1.10 | 1.13 | 1.18 |
| Tensile strength (kgf/cm²) | 401 | 157 | 133 | 58 | 59 | 28 |
| Elongation (%) | 31 | 330 | 350 | 280 | 255 | 150 |

| | | | | | | |
|---|---|---|---|---|---|---|
| Note: (1) C223A: Butadiene rubber-based copolymer available from Mitsubishi Rayon Co., Ltd. in Japan (2) 240D: Item number of TPEE available from SK Chemicals in Rep. of Korea (3) KN100: Item number of PET-G available from SK Chemicals in Rep. of Korea | | | | | | |

Referring to Table 3, the specimen extruded without 240D (which is exemplary used as a TPEE) according to Example 1 displayed good surface state and bad properties in terms of tensile strength and elongation, too insignificant to measure, and had almost no change of hardness. The specimens of Examples 2 to 5 showed a high degree of softening and good state after extrusion.

For the specimen of Example 6 relative to that of Example 5, there was an abrupt deterioration in properties, presumably resulting from the excessively high proportion of C223A (butadiene rubber-based copolymer) and palm oil to KN100 (PET-G), and the properties were no longer improved by adding a large amount of 240D (TPEE) with good properties.

According to this experiment, the most desirable composition may include, with respect to 100 parts by weight of KN100, 100 parts by weight of C223A, 130 parts by weight of palm oil, and at most 150 parts by weight of 240D. It may be impossible to confer this composition including KN100, C223A, palmoil, and 240D with a lower hardness than Shore A 72 (containing about 75 parts by weight of a plasticizer with respect to 100 parts by weight of PVC).

### <Experimental Example 4>

* Block copolymer; sis3000: 200 parts by weight of styrene-isoprene-styrene SIS200 and 300 parts by weight of TPU mixed with 100 parts by weight of kn100.

Thermoplastic rubbers (TPRs) are formulated using different polystyrene-elastomer block copolymers, which are specifically designated as styrene-butadiene-styrene (SBS), styrene-ethylene-butadiene-styrene (SEBS), styrene-isoprene-styrene (SIS), styrene-ethylene-propylene-styrene (SEPS), etc. They are commercially available as an alternative to soft PVC or vulcanized rubber. SBS and SEBS are the most popular materials for TPRs, and SIS is chiefly used in gluing agents. SEBS has excellent weather resistance, thermal resistance, and processability, but poor adhesion and printability. SBS is relatively inexpensive but inferior to SEBS or SEPS in weather resistance, aging resistance, thermal resistance, oil resistance, etc. The TPR compositions use paraffin oil rather than a plasticizer in order to improve processability and reduce hardness. The oil content available is 200 parts by weight or greater. There may be a TPR composition having an A hardness of 10 or less.

**[Table 4]**

| Component | Example | | | | | | |
|---|---|---|---|---|---|---|---|
| | **1** | **1-1** | **2** | **2-1** | **3** | **3-1** | **4** |
| KN100 | 100 | 100 | 100 | 100 | 100 | | 100 |
| QUINTAC 3390 (SIS) | 5 | | 10 | | 20 | | 50 |
| 475A (Ahardness: 75) | | 5 | | 10 | | 20 | |
| 240D | 100 | 100 | 100 | 100 | 100 | | 100 |
| Miscibility | Good | Good | Good | Good | Good | Good | Good |
| Hardness (A) | 97±3 | 97±3 | 96±3 | 96±3 | 95±3 | 97±3 | 95±3 |
| Tensile strength (kgf/cm²) | 2.41 | 2.94 | 2.29 | 2.88 | 2.25 | 2.70 | 1.98 |
| Elongation (%) | 326 | 473 | 342 | 429 | 390 | 417 | 360 |

| | Example | | | | | | |
|---|---|---|---|---|---|---|---|
| | **4-1** | **5** | **5-1** | **6** | **6-1** | **7** | **7-1** |
| KN100 | 100 | 100 | 100 | 100 | 100 | 100 | 100 |
| QUINTAC 3390 (SIS) | | 100 | | 120 | | 150 | |
| 475A (Ahardness: 75) | 50 | | 100 | | 120 | | 150 |
| 240D | 100 | 100 | 100 | 100 | | 100 | |
| LLDPE | | | | | | | |
| Miscibility | Good | Good | Good | Good | Good | Good | Good |
| Hardness (A) | 97±3 | 94±3 | 96±3 | 94±3 | 95±3 | 92±3 | 92±3 |
| Tensile strength (kgf/cm²) | 2.44 | 1.78 | 1.97 | 1.7 | 1.89 | 1.64 | 1.59 |
| Elongation (%) | 414 | 339 | 333 | 328 | 228 | 334 | 301 |

| | Example | | | | | | |
|---|---|---|---|---|---|---|---|
| | **8** | **8-1** | **8-3** | **9** | **9-1** | | |
| KN100 | 100 | 100 | 50 | 100 | 100 | | |
| QUINTAC 3390 (SIS) | 200 | | | 250 | | | |
| 475A (Ahardness: 75) | | 200 | 100 | | 300 | | |
| 240D | 100 | 100 | 50 | 100 | 100 | | |
| | | | 200 | | | | |
| Miscibility | Good | Good | Good | Good | Good | | |
| Hardness (A) | 90±3 | 90±3 | 92 | 88±3 | 84±3 | | |
| Tensile strength (kgf/cm²) | 1.41 | 1.57 | 1.47 | 1.36 | 1.39 | | |
| Elongation (%) | 286 | 456 | 427 | 328 | 353 | | |

| | | | | | | | |
|---|---|---|---|---|---|---|---|
| Note: (1) QUINTAC 3390: Item number of SIS available from ZEON Corp. in Japan (2) 3120: Item number of LLDPE available from Hanwha Chemical Co, Ltd. in Rep. of Korea (hardness; A96±3, tensile strength (kgf/cm²); 1.34, elongation (%); 184) (3) 475A: Item number of TPU available from Kolon Industries, Inc. in Rep. of Korea | | | | | | | |

Referring to Table 4, a property testing was performed as given in Examples 1 to 9-1, where TPR and TPU resins were used in place of a plasticizer and oil in order to soften the PET resin. The addition of a plasticizer or oil to food packaging films causes contamination of the contents with a bleeding of liquid materials. To solve this problem, the hardness was lowered by mixing the PET resin with polystyrene block copolymer (referred to as thermoplastic rubber (PTR)) and thermoplastic polyurethane (TPU) that were excellent in compatibility with the PET resin and low hardness and nontoxic. In the property testing of Examples 1 to 9, the used amount of SIS 3390 was increased in a stepwise manner from 5 to 250 parts by weight with respect to 100 parts by weight of KN100 (PET-G) as given in Table 4. As can be seen from the testing results, the compositions were excellent in compatibility and properties at once. The composition of Example 8 exhibited a lower Shore A hardness of 90±3 than LLDPE but was superior in properties to LLDPE, making it possible to produce soft films having such a low hardness as soft PVC films containing 50 parts by weight of a plasticizer. Due to the excessively high content of styrene-isoprene-styrene (SIS), the film made from the composition of Example 8 was slightly sticky and that from the composition of Example 9 exhibited severe stickiness.

For finding out a solution to this problem, the TPU resin was used in an amount increased stepwise as given in Examples 1-1 to 9-1. The results were evaluated in comparison with the case of using SIS. Thermoplastic polyurethane (TPU) is a kind of polyurethane resin excellent in elasticity, transparency, oil resistance, and wear resistance and used in the widest range of applications, such as automobile, furniture, shoe, sporting goods, medical equipment, etc. As a substitute for soft PVC, TPU is used in the expanding range of applications and categorized into polyester- and polyether-based TPUs. The polyester-based TPU is excellent in wear resistance, mechanical properties, chemical resistance, and injection processability. The polyether-based TPU is a block copolymer resin excellent in cold resistance, hydrolysis resistance, and compatibility and miscibility with other resins like PVC, ABS, SBS, TPEE, etc., so it exhibits such good properties as to be used to improve the properties of other resins. Among the PET copolymers, PET-G is most popular due to its good properties.

As can be seen from the results of the testing according to Examples 1-1 to 9-1, the compositions using TPU in place of SIS displayed somewhat higher hardness and higher elongation. In Examples 6-1 and 7-1, the compositions used a mixture of KN100 (PET-G) and 475A (TPU) alone and exhibited properties deteriorated with an increase in the proportion of TPU. This resulted from the poor compatibility between TPU and PET resins . The composition of Example 8-1 had the higher proportion of the TPU resin and used 240D (TPEE) highly compatible with the TPU resin, resulting in reducing hardness and improving properties. The composition of Example 9-1 used an increased amount of 475A up to 300 parts by weight with respect to 100 parts by weight of KN100 to attain properties as good as soft PVC containing 60 parts by weight of a PVC plasticizer and exhibit neither stickiness nor scratches on the surface of the film, further acquiring processability high enough to process by injection with a dry hopper alone without a dehumidifying process.

In this manner, the addition of PET copolymer and TPEE to TPU may improve the poor properties of the TPU in terms of processability and resistance to moisture (hydrolysis) and enable the production of recyclable laminated fabrics with good properties of TPU like vinyl leather or tarpaulin. In Example 8-1, the composition was prepared by mixing the composition of Example 8-1 and LLDPE at a ratio of 1:1 to acquire lower hardness and better properties. The composition of Example 8-1 was particularly superior in elongation to the soft PVC. Accordingly, the composition of the present invention using the TPU resin is considered to be useful in improving the properties of the polyolefin-based resins.

### <Experimental Example 5>

White oil, also referred to as mineral oil, is a liquid by-product with alkane and paraffin structures as produced in the process of refining crude oil and used as a softening agent for styrene-based block copolymers. The PVC resin can be easily processed into soft products with high quality merely by adding a plasticizer. By contrast, using the PET resin as a principal component in the production of soft products entails more various and likely adverse effects, including bleeding, migration, or blooming, than using the PVC resin.

**[Table 5]**

| Component | Experimental Example | | | | | |
|---|---|---|---|---|---|---|
| | 1 | 2 | 3 | 4 | 5 | 6 |
| KN100 | 100 | 100 | 100 | 100 | 100 | 100 |
| C223A | 20 | 20 | 60 | 60 | 50 | 50 |
| 240D | 40 | 40 | 80 | 80 | 120 | 120 |
| Palm oil | 20 | 10 | 60 | 30 | 50 | 25 |
| White oil | | 10 | | 30 | | 25 |
| Tensile strength (kgf/mm²) | 1.93 | 2.09 | 1.02 | 1.25 | 1.22 | 1.41 |
| 100% modulus (kgf/mm²) | 1.36 | 1.65 | 156 | 0.95 | 0.87 | 1.07 |
| 200% modulus (kgf/mm²) | 1.36 | 1.62 | 170 | 1.10 | 0.93 | 1.32 |
| Mixture state | Sticky | Good | Sticky | Good | Sticky | Good |

Referring to Table 5, the experiments were performed concerning the change in properties of the PET resin as given in the experimental examples 1 to 6. The composition containing less than 20 parts by weight of palm oil with respect to 100 parts by weight of KN100 (PET-G) caused neither stickiness nor bleeding on the surface. By contrast, the content of palm oil greater than 20 parts by weight resulted in an abrupt increase of the stickiness and bleeding. To prevent such adverse effects, a combination of white oil and palm oil was used to reduce the stickiness and increase the properties, specifically, tensile strength as shown in the experimental examples 2, 4 and 6.

In the experimental example 4 and 6, the tensile strength was improved from 1.25 to 1.41 at the similar Shore A hardness of about 73 by reducing the content of oil from 60 to 50 and increasing the content of TPEE from 80 to 120. Yet, using a large amount of the expensive 240D (TPEE) may help improve the properties but cause a rise of the production cost.

In conclusion, the content of white oil less than 100 parts by weight with respect to 100 parts by weight of palm oil can prevent the surface bleeding or blooming of oil and improve the properties.

### <Experimental Example 6>

The PBT resin, prepared by reacting terephthalic acid with 1,4-butanediol, is a crystalline engineering plastic (EP) resin excellent in thermal resistance, chemical resistance, and electrical properties. Due to its high crystallization rate, the PBT resin is characterized by short molding cycle and excellent properties in terms of weather resistance, friction resistance, wear resistance and dimensional stability and chiefly used in electric, electronic, or automobile parts. Particularly excellent in thermal resistance, the PBT resin has only a slight deterioration in the properties at high temperature (i.e., a long-term use available at 120 to 130 °C) and shows no deformation under high-temperature and high-load conditions . The melting point of the PBT resin is 220 to 225 °C.

It is expected to greatly improve the properties of elastomers containing the PET-G resin as a base material by using the PBT resin having good properties in place of the PET-G resin,

**[Table 6]**

| Component | Example | | | | |
|---|---|---|---|---|---|
| | **1** | **2** | **3** | **4** | **5** |
| KN100 | 100 | 90 | 80 | 50 | |
| GP1000S | | 10 | 20 | 50 | 100 |
| Plasticizer (NEOP): part | 40 | 40 | 40 | 40 | 40 |
| C223A | 20 | 20 | 20 | 20 | 20 |
| Hardness (A) | 95 | 95 | 95 | 95 | 94 |
| Thermal property (VSP) : 4.6kg/cm², °C | 67.6°C | 68.7°C | 74.5°C | 95.7°C | 129.2°C |

| | | | | | |
|---|---|---|---|---|---|
| Note: * VSP (Vicat Softening Temperature) : ASTM D1525 PBT: GP1000S, a PBT item number from LG Chem in Rep. of Korea | | | | | |

LLDPE chiefly used in packaging films has a hardness of about Shore A95 and a Vicat softening temperature (VSP) ranging from 95 °C to 105 °C. The composition of Example 1 using the PET-G (KN100) resin as a principal component exhibits a Vicat softening temperature (VSP) of 67.6 °C, which is far lower than the VSP of the LLDPE. In order to compensate for this problem, the compositions of Examples 1, 2 and 3 used the PBT resin, which was highly compatible with the PET-G resin and C223A (butadiene rubber copolymer), very likely to absorb vegetable oils like palm oil, and excellent in properties. The VSP value increased with an increase in the proportion of GP1000S (PBT) . In Example 3, the composition was much superior in thermal resistance to other resins having an Shore A hardness of 94, realizing the production of special films requiring high thermal resistance. The reason of such results lies in the fact that the PBT resin having a Vicat softening temperature (VSP) of about 155 °C was used in place of the PET-G (KN100) having a VSP value of about 80 °C.

The composition of Example 2 was not greatly improved in the thermal resistance due to using a small amount of GP1000S (PBT), while using GP1000S in an increased amount of 20 parts by weight in Example 3 resulted in greatly improving the thermal resistance.

### <Experimental Example 7>

In this experiment, the composition comprised of the PET copolymer was mixed with linear low-density polyethylene (L-LDPE) primarily used as a resin for packaging. Considered as one of the olefin-based resins most excellent in compatibility with the composition of the present invention, the L-LDPE resin was used in performing the experiment as given in Table 7. The linear low-density polyethylene (LLDPE) resin is higher in elongation than LDPE by about 30 %. The film made from the LLDPE resin does not tear easily due to its high hardness, so the LLDPE resin is primarily used for production of thin films excellent in transparency, impact resistance, water resistance, and chemical resistance.

**[Table 7]**

| | Example | | | | |
|---|---|---|---|---|---|
| | **1** | **2** | **3** | **4** | **5** |
| KN100 | | 100 | 100 | 100 | 100 |
| NEOP | | 20 | | | |
| C223A | | 10 | | | |
| 240D | | 100 | 100 | 100 | 100 |
| QUINTAC 3390 (SIS) | | | 30 | 30 | 30 |
| Total | | 230 | 230 | 230 | 230 |
| Added amount of 3120 (LLDPE) | 100 | | | 115 | 230 |
| Proportion of 3120 (%) | | | 0 | 50 | 100 |
| Proportion of PP (%) | | | | | |
| Specific gravity | 0.94 | 1.15 | 1.16 | 1.08 | 1.04 |
| Hardness (A) | 96 | 95 | 96 | 95 | 95 |
| Tensile strength (kgf/mm²) | 1.34 | 2.21 | 2.36 | 1.75 | 1.53 |
| 100% modulus (kgf/mm²) | 98 | 176 | 186 | 162 | 136 |
| 200% modulus (kgf/mm²) | 0 | 183 | 194 | 168 | 142 |
| Elongation (%) | 184 | 397 | 426 | 358 | 391 |

| | Example | | | | |
|---|---|---|---|---|---|
| | **6** | **7** | **8** | **9** | **10** |
| KN100 | 100 | 100 | 100 | 100 | 100 |
| NEOP | | | | | |
| C223A | | | | | |
| 240D | 100 | 100 | 100 | 100 | 40 |
| QUINTAC 3390 (SIS) | 30 | 30 | 30 | 30 | 32 |
| Total | 230 | 230 | 230 | 230 | 172 |
| Added amount of 3120 (LLDPE) | 690 | 1159 | 1610 | 2300 | 86 |
| Proportion of 3120 (%) | 300 | 500 | 700 | 1000 | 50 |
| Proportion of PP (%) | | | | | 50 |
| Specific gravity | 0.97 | 0.96 | 0.94 | 0.94 | 1.07 |
| Hardness (A) | 95 | 96 | 95 | 95 | 94 |
| Tensile strength (kgf/mm²) | 1.53 | 1.48 | 1.46 | 1.39 | 2.14 |
| 100% modulus (kgf/mm²) | 136 | 126 | 120 | 104 | 138 |
| 200% modulus (kgf/mm²) | 142 | 122 | 118 | 23 | 0 |
| Elongation (%) | 391 | 488 | 716 | 324 | 164 |

| | | | | | |
|---|---|---|---|---|---|
| Note: (1) 3120: Item number of LLDPE available from Hanwha Chemical Co, Ltd. in Rep. of Korea (2) QUINTAC 3390: Item number of SIS available from ZEON Corp. in Japan (3) Moplen RP344NK Random PP: Available from Polymirae Corp. | | | | | |

Referring to Table 7, the composition of Example 2 was prepared by using 20 parts by weight of NEOP (plasticizer) and 10 parts by weight of C223A (core-shell type copolymer) with respect to 100 parts by weight of KN100 (PET-copolymer) and 100 parts by weight of 240D (TPEE); and the composition of Example 3 was prepared by adding 30 parts by weight of QUINTAC 3390 (SIS) to 100 parts by weight of KN100 (PET-copolymer) and 100 parts by weight of 240D (TPEE). The properties were more excellent in the Example 3 using 3390 (SIS) than in Example 2 using NEOP (plasticizer) and C223A (core-shell type copolymer) at a similar hardness. The use of a plasticizer or oil for the food packaging film is avoided, because it causes contamination with the bleeding of the plasticizer or oil. For this reason, LLDPE is added to the composition of Example 3.

In comparison to the composition of Example 3, the composition of Examples 4 to 9 had the amount of the LLDPE increased by 50 % (0.5-fold) to 1000 % (10-fold) . As can be seen from the experimental results, the compositions of Examples 4 to 8 were significantly improved in properties; the composition of Example 9 had a slight effect of improving properties; and the composition of Example 10 using LLDPE and PP at 50:50 ratio showed a great increase in tensile strength but a decrease in elongation, 100% modulus and 200% modulus at a similar hardness. This presumably resulted from the low compatibility between the composition of Example 3 and PP. It is expected to improve this problem by using a resin component with higher compatibility than random PP RP344NK.

The film made from the composition of the present invention in combination with an olefin-based resin is improved in thermal adhesion with the film made from an olefin-based resin and compatibility with a PET resin, contributing to the recycling of waste plastics.

The film using the PET resin coated with an olefin-based resin cannot be recycled due to its low compatibility with the products made from a PET resin or an olefin- or styrene-based resin. Contrarily, the film made from the composition of the present invention in combination with an olefin-based resin is possible to recycle together with the products made from a PET resin or an olefin- or styrene-based resin and to co-extrude with an olefin-based resin, realizing the production of multi-layer films and enhancing the adhesiveness of the olefin-based film. When added to the PET resin, it helps adjust the hardness of the PET resin and improve the processability of the PET, increasing the diversity of products made from the PET resin.

Although the greatest weakness of the PET resin is the difficulty of softening, the packaging film composition recyclable and excellent in adhesiveness according to the present invention can be processed alone or in combination with an olefin-based resin through mixing or co-extrusion to produce films, which are more excellent in thermal adhesion and tensile strength and recyclable. Hence, they can be substituted for the films made from unrecyclable PET resins alone or in combination with nylon or olefin-based resins through lamination, coating, or co-extrusion, realizing a thermal adhesion of a packaging material having a film thickness of 0.5 mm or greater to prevent serious environmental contamination caused by waste plastics. The films made by applying a coating of LLDPE resin on PET or OPP films are chiefly used in caps for water bottles or lids for food containers. Such films cannot be recycled unless separated from the bottles or containers due to poor compatibility and miscibility with PP or PS resins constituting the bottles or containers, so they may cause environmental contaminations. By contrast, the films made from the composition of the present invention alone or in combination with another resin such as LLDPE or PP are excellent in tensile strength and thermal adhesion and recyclable due to their high compatibility and miscibility with PP or PS resins.

The foregoing description of the preferred embodiments of the invention is presented for purposes of illustration and description only. It is not intended to be exhaustive nor to limit the invention to the precise form disclosed; and obviously many modifications and variations are possible in light of the above teaching. Such modifications and variations that may be apparent to a person skilled in the art are intended to be included within the scope of this invention as defined by the accompanying claims.

## Claims

1. A recyclable packaging film composition, comprising:
- 100 parts by weight of a PET copolymer or a PBT resin;
- 5 to 120 parts by weight of an additive selected from the group consisting of an ecofriendly plasticizer, vegetable oil, styrene-based block copolymer and a thermoplastic polyurethane (TPU) resin;
- 5 to 100 parts by weight of acryl rubber or an acryl-based copolymer and butadiene rubber or a butadiene-based copolymer; and
- 5 to 150 parts by weight of a thermoplastic polyester elastomer (TPEE) or a thermoplastic polyurethane (TPU),
wherein the packaging film composition is available for processing by any one method of injection, extrusion, and calendering.

2. The recyclable packaging film composition of claim 1, comprising:
- 100 parts by weight of a PET copolymer;
- 5 to 120 parts by weight of an ecofriendly plasticizer;
- 5 to 100 parts by weight of acryl rubber or an acryl-based copolymer and butadiene rubber or a butadiene-based copolymer; and
- 5 to 150 parts by weight of a thermoplastic polyester elastomer (TPEE).

3. The recyclable packaging film composition of claim 2, wherein the ecofriendly plasticizer is an ester-based plasticizer, in particular a carboxylic aromatic ester.

4. The recyclable packaging film composition of claim 1, wherein the additive is a vegetable oil.

5. The recyclable packaging film composition of claim 1, wherein the additive is a styrene-based block copolymer.

6. The recyclable packaging film composition with excellent adhesiveness of claim 1, wherein the additive is a thermoplastic polyurethane (TPU) resin.

7. The recyclable packaging film composition of anyone of the previous claims, further comprising 5 to 100 parts by weight of a paraffin-based oil.

8. The recyclable packaging film composition of claim 2, wherein the ecofriendly plasticizer is used in combination with a core-shell type copolymer.

9. The recyclable packaging film composition of claim 1, comprising:
- 100 parts by weight of a PBT resin;
- 5 to 120 parts by weight of an ecofriendly plasticizer;
- 5 to 100 parts by weight of acryl rubber or an acryl-based copolymer and butadiene rubber or a butadiene-based copolymer; and
- 5 to 150 parts by weight of a thermoplastic polyester elastomer (TPEE).

10. The recyclable packaging film composition of claim 2, further comprising 100 to 2,000 parts by weight of a polyolefin-based resin.

11. The recyclable packaging film composition of claim 1, comprising:
- 100 parts by weight of a PET copolymer;
- 5 to 120 parts by weight of an ecofriendly plasticizer;
- 5 to 100 parts by weight of acryl rubber or an acryl-based copolymer and butadiene rubber or a butadiene-based copolymer; and
- 5 to 150 parts by weight of a thermoplastic polyurethane (TPU) resin.

12. The recyclable packaging film composition with excellent adhesiveness of claim 2, further comprising 10 to 300 parts by weight of a TPU resin.
